# EUROPÄISCHE PATENTSCHRIFT

(11) **EP 0 707 037 B1**
(45) Veröffentlichungstag und Bekanntmachung des Hinweises auf die Patenterteilung: **07.04.1999**
(21) Anmeldenummer: 95113431.1
(22) Anmeldetag: 26.08.1995
(51) Int. Cl.: C08L 1/18, B29B 7/60

(54) **Verfahren und Vorrichtung zur Herstellung von plastifiziertem Cellulosenitrat**
Process and apparatus for the preparation of plasticized cellulose nitrate
Procédé et dispositif pour la préparation de nitrocellulose plastifiée

(30) Priorität: 16.09.1994 DE 9415065 U; 08.03.1995 DE 19508230
(43) Veröffentlichungstag der Anmeldung: 17.04.1996
(73) Patentinhaber: HAGEDORN AG, 49074 Osnabrück (DE)
(72) Erfinder: Meyer, Paul-Gerhard, D-49808 Lingen/Ems (DE); Boom, Wilhelm, verstorben (DE)
(74) Vertreter: Busse & Busse Patentanwälte

(56) Entgegenhaltungen:
- EP-A- 0 369 246
- EP-A- 0 548 837
- WO-A-88/02743
- DE-A- 1 952 154
- DE-A- 2 215 624
- DE-C- 139 738
- GB-A- 666 052
- DATABASE WPI Week 8842 Derwent Publications Ltd., London, GB; AN 296002 & JP-A-63 215 744 (ART PLS KK) , 8.September 1988

## Beschreibung

Die Erfindung bezieht sich auf ein Verfahren und eine Vorrichtung zur Herstellung von plastifiziertem Cellulosenitrat gemäß dem Oberbegriff des Anspruches 1 bzw. 3. Das mit Phlegmatisierungsmitteln versehene Cellulosenitrat weist dabei insbesondere einen Stickstoffgehalt von 12,6 Gew.-% oder weniger auf.

Es ist bekannt, plastifiziertes Cellulosenitrat bei der Herstellung von Farben und Lacken einzusetzen (WPI/Derwent 88-296 002 [42]; EP-A-548 837; DE-C-13 97 38), wobei es insbesondere bei der Herstellung von Lederlacken und Möbellacken Verwendung findet. Außerdem findet es Anwendung bei der Herstellung von Klebern und Druckfarben (DE-A-22 15 624), insbesondere für den Verpackungstiefdruck, den Flexodruck und den Siebdruck. Durch den Einsatz von plastifiziertem Cellulosenitrat werden die Haftfestigkeit, die Verwendung in reaktiven Systemen (z. B. Diisocyanaten) und die Verarbeitungseigenschaften dieser Produkte wesentlich verbessert.

Für eine Bearbeitung von Gummi-Halbzeugen (DE-A-19 52 154) oder thermoplastischen Kunststoffbändern (GB-A-660.052) sind Walzenaggregate in Form von Kalandern bekannt. Dabei wird ein Preßwalzvorgang zwischen zwei Walzenkörpern ausgeführt, bei dem eine Glättung des zur Reifenherstellung vorgesehenen Gummi-Halbzeuges erfolgt bzw. das Kunststoffmaterial bis auf Schmelztemperatur erwärmt und zu einer Folienbahn ausgeweitet wird. Diese Kalanderverfahren sind für die Einarbeitung von Phlegmatisierungsmitteln in das entzündungsgefährdete Cellulosenitrat nicht geeignet.

Bei einem zur Einarbeitung von Phlegmatisierungsmitteln in Cellulosenitrat vorgeschlagenen Verfahren gemäß EP 0 369 246 B1 ist ein Scherwalzenaggregat vorgesehen, das als ein offener Doppelschneckenextruder mit zwei parallel und horizontal angeordneten, gegenläufig arbeitenden Scherwalzen ausgebildet ist. Die Walzen sind mit Schernuten versehen, die das auf einem Walzenende aufgegebene Gemisch als Zwischenprodukt kontinuierlich zum anderen Walzenende transportieren. Die Schernuten weisen dabei eine Breite zwischen 5 und 30 mm und eine Tiefe von 1 bis 10 mm auf.

Der Abstand zwischen den Nuten beträgt 30 bis 300 mm und der Winkel zur Rotationsachse der Scherwalzen beträgt 10° bis 80°. Die Walzenlänge wird mit 1500 mm und der Walzendurchmesser mit 200 mm angegeben, wobei die vordere Walze eine Temperatur von 80°C und die hintere Walze eine Temperatur von 130°C hat. Bei einer Drehzahl der vorderen Walze von 35/min. bzw. 27/min. für die hintere Walze ist die durchschnittliche Verweilzeit des Materials auf der Walze mit ca. 3 min. angegeben. Mit diesen Parametern ist ein Verkneten, ein Homogenisieren und ein Trocknen in einem kontinuierlichen Verfahrensschritt vorgesehen, so daß ein Restwassergehalt von 1,5 % erreicht wird. Durch Ausrüstung der Schwerwalze mit einem Granulieraggregat wird die Mischung in Granulatform von der Scherwalze abgenommen.

Ein wesentlicher Nachteil dieser Verfahrensführung besteht darin, daß - bedingt durch die Länge der Walze (1500 mm) und die relativ lange Materialverweilzeit auf der Walze (durchschnittlich 3 min.) - das Material durch den auf der Walzenlänge und im Walzenspalt stattfindenden Knetprozeß durchgelatiniert. Danach weist das Cellulosenitratgemisch eine schlechte Löslichkeit auf, die durch die Granulatform noch weiter nachteilig beeinflußt wird. Hinzu kommen, daß der geringe Wassergehalt im Cellulosenitrat nur erreicht werden kann im Zusammenwirken von Materialverweilzeit, Scherwalzenlänge und einer Walzentemperatur von 130°C auf der hinteren Walze. Cellulosenitrat ist jedoch ein leicht entzündbarer Stoff mit einer Verpuffungstemperatur von 180°C bis 186°C (Karl Fabel: Nitrocellulose, Herstellung und Eigenschaften; Ferdinand Enke Verlag, Stuttgart 1950, S. 137). Bereits ab einer Temperatur von 130°C spalten sich Stickoxyde ab, wobei das Gesetz gilt, daß für je 5°C Temperaturzunahme eine Verdoppelung der Zersetzungsgeschwindigkeit eintritt (ebenda). Bei einer Verweilzeit auf den Scherwalzen von durchschnittlich 3 min. und einer Temperatur der hinteren Walzen von 130°C wird das Zwischenprodukt durch die sich beim Knetprozeß entwickelnden Friktionskräfte jedoch bis in den Bereich der Zersetzungstemperaturen erwärmt, wobei die Zersetzungsgeschwindigkeit außerdem mit steigendem Stickstoffgehalt des Cellulosenitrats zunimmt. Das in der EP 0 369 246 B1 vorgeschlagene Verfahren ist daher instabil und die Verfahrenssicherheit ist um so geringer, je höher der Stickstoffgehalt des eingesetzten Cellulosenitrats ist. Hinzu kommt die geringe Verarbeitungssicherheit des phlegmatisierten Cellulosenitrates, da dieses bei der Verarbeitung zur Bildung von Staub neigt und dieser sich nachteilig elektrostatisch aufladen kann. Außerdem weist das Verfahren gemäß der EP 0 369 246 B1, u.a. wegen der langen Materialverweilzeit auf der Walze, eine nachteilig geringe Durchsatzleistung auf.

Die Erfindung befaßt sich mit dem Problem, ein Verfahren und eine Vorrichtung zur Herstellung von plastifiziertem Cellulosenitrat gemäß dem Oberbegriff des Anspruches 1 bzw. 3 zu schaffen, die bei sehr geringem Gesundheitsrisiko und hoher Umweltverträglichkeit eine Verarbeitung möglichst aller bekannten Phlegmatisierungsmittel in einem kontinuierlichen Fertigungsverfahren mit hoher Durchsatzleistung ermöglichen, wobei insbesondere die eine geringe Lösungsmittelretention aufweisenden und gegen Migration beständigen Weichmacherkomponenten sehr gut mit dem Cellulosenitrat verarbeitbar sind.

Es wurde gefunden, daß dieses Problem mit dem in den Ansprüchen 1 und 2 angegebenen Verfahren und der in den Ansprüchen 3 bis 8 angegebenen Vorrichtung gelöst werden kann. Dabei wird das Material nicht mehr geknetet, sondern nur noch verdichtet und homogenisiert. Als besonders gut verarbeitbar hat sich ein Gemisch aus Cellulosenitrat mit einem Stickstoffgehalt von 12,6 Gew-% oder weniger und Estern der Adipinsäure und/oder der Zitronensäure und/oder der Sebacinsäure und/oder Estern von Zuckern und/oder Polyolen mit verschiedenen Säuren und/oder Kolophoniumabkömmlingen als phthalatfreien Weichmachern bzw. Weichharze ergeben.

Bei Ausführung des erfindungsgemäßen Verfahrens werden bevorzugt handelsübliche Cellulosenitrate unterschiedlicher Viskositätsstufen mit einem Stickstoffgehalt von 10-12,6 Gew.-% zur Erzeugung der Cellulosenitrat-Weichmacher-Gemische eingesetzt. Besonders bevorzugte Gemische sind solche, die aus 82-40 Gew.-%, vorzugsweise 82-75 Gew.-%, Cellulosenitrat und 18-60 Gew.-%, vorzugsweise 18-25 Gew.-%, Ester der Adipinsäure und/oder der Zitronensäure und/oder der Sebacinsäure und/oder Estern von Zuckern und/oder Polyolen mit verschiedenen Säuren und/oder Kolophoniumabkömmlingen bestehen. Folgende Ester sind hierbei bevorzugt geeignet:
- Dibutylsebacatat (DBS),
- Diisobutyladipat (DIBA),
- Dioctyladipat (Di-2-Ethyl-Hexyladipat/DOA),
- Triethylcitrat (TEC),
- Succroseacetoisobutyrat (SAIB).
- Methyldihydroabietat (HercolynD),
- Acetyltributylcitrat (ATBC) oder
- Polyesterpolyol Rokraphen 145.

Als Endprodukt liegt das plastifizierte Cellulosenitrat in Form von festen, farblosen, unregelmäßig gebrochenen Plättchen vor, die auch als farblose Chips bezeichnet werden.

Die Eigenschaften der erfindungsgemäßen phthalatfreien Weichmacher bzw. Weichharze in Cellulosenitrat sollen im Vergleich zu herkömmlichen Weichmachertypen im folgenden noch näher erläutert werden:

Die bekannten phthalathaltigen Weichmacher wie Dioctylphthalat (DBP) und Dibutylphthalat (DOP) sowie auch epoxydiertes Sojabohnen- oder Leinöl einerseits und die erfindungsgemäßen phthalatfreien Weichmacher Dibutylsebacetat (DBS), Diisobutyladipat (DIBA), Dioctyladipat (DOA), Triethylcitrat (TEC), Acetyltributylcitrat (ATBC) sowie die Weichharze, Succeroseacetoisobutyrat (SAIB), Methyldihydroabietat (HercolynD) und Polyesterpolypol Rokraphen 145 andererseits wurden hinsichtlich ihrer Kältebeständigkeit, ihrer Lichtbeständigkeit gegen Vergilbung, ihrem Gelatinierungsverhalten, ihrer Wärmebeständigkeit, ihrer Dehnbarkeit, ihrer Knickfestigkeit, ihrem Glanzverhalten, ihrer Reaktionsfähigkeit, der Migrationsbeständigkeit und ihrer Lösemittelretention untersucht. Die Ergebnisse dieser Untersuchung sind in Tabelle 1 niedergelegt.

Die Untersuchungen ergaben, daß die erfindungsgemäßen phthalatfreien Weichmachertypen dem bisher bekannten phthalatfreien epoxydierten Sojaöl bezüglich der untersuchten Eigenschaften in jedem Punkt überlegen sind. Aber auch gegenüber den bekannten phthalathaltigen Weichmachern DBP oder DOP sind zumindest vergleichbare, wenn nicht gar bessere Ergebnisse mit den erfindungsgemäßen Weichmachertypen in Cellulosenitrat-Gemischen zu erzielen. Hieraus folgt, daß allein aufgrund der untersuchten physikalischen Beschaffenheiten die erfindungsgemäßen Weichmachertypen erhebliche Vorteile gegenüber den bisher bekannten Weichmachertypen aufweisen.

Darüber hinaus zeichnen sich die erfindungsgemäßen phthalatfreien Weichmacher bzw. Weichharze durch gute Verträglichkeit mit dem Cellulosenitrat, eine geringe Umweltgefährdung, sowie ein geringes Gesundheitsrisiko aus. Darüber hinaus zeichnen sich die Weichharze durch geringe Lösemittelretention und gute Migrationsbeständigkeit aus. In der Tabelle 1 sind ferner sowohl die Kennzeichnung nach der Gefahrstoffverordnung in Deutschland als auch die Zulassung der "Food and Drug Assiciation" in den USA für Beschichtungen von Lebensmittelverpackungen als Bewertungsmaßstab aufgeführt.

Als Phlegmatisierungsmittel für Cellulosenitrat kommen eine Vielzahl von Produkten in Frage. Die wichtigsten Typen sind:
1. "Monomere" Weichmacher nicht reaktiv, z. B.:
   1.1 Phthalate: z.B. Diethylphthalat (DEP); Dibutylphthalat (DBP); Diisobutylphthalat (DIBP); Butylbenzylphthalat (BBP); Dibutylglykolphthalat; Di-2-ethyl-hexylphthalat (DOP/DEHP); Di-octylphthalat; Di-isooctylphthalat (DIOP) ; Di-iscnonylphthalat (DINP); Di-cylohexylphthalat (DCHP)
   1.2 Adipate: z.B. Diisobutyladipat (DIBA); Dioctyladipat (DOA) ; Diisooctyladipat (DIOA)
   1.3 Sebacate: z.B. Dibutylsebacat (DBS); Dioctylsebacat (DOS)
   1.4 Citrate: z.B. Acetyl-tri-ethylcitrat (ATEC Citroflex A2); Acetyl-tri-butylcitrat (ATBC Citroflex A4)
   1.5 Phosphate: z.B. Trioctylphosphat (TOP); Di-phenyloctylphosphat (DPO)
   1.6 Sonstige Ester: z.B. Butylstearat; Dipropylenglykoldibenzoat
   1.7 Sonstige: z.B. Campher
2. "Monomere" Weichmacher reativ, z.B.:
   2.1 Citrate hydroxylgruppenhaltig: z.B. Tri-ethylcitrat (TEC; Citroflex 2); Tri-butylcitrat (TBC; Citroflex 4)
   2.2 Epoxidierte Öle: z.B. Epoxidiertes Sojaöl; epoxidiertes Leinöl
   2 .3 Sonstige hydroxylgruppenhaltige Weichmacher: z.B. Ricinusöl
   2.4 Ungesättigte Weichmacher: z.T. modifiziert: z.B. Soja-öl; Leinöl
3. "Polymere" Weichmacher nicht reaktiv, z.B.:
   3.1 Sebacat: z.B. Paraplex G25
   3.2 Adipate: z.3. Paraplex G40; Polymer-Weichmacher P 103
4. Weichharze nicht reaktiv, z.B.:
   4.1 Zuckerderivate: z.B. Succroseacetoisobutyrat (SAIB)
   4.2 Polyurethanweichharze nicht reaktiv: z.B. Neo Rez U 325
   4.3 Kolophonium-Derivate: z.B. Methyldihydroabietat (HercolynD), Diethylenglykoldihydroabietat, Triethylenglykoldihydroabietat
   4.4 Carbamidsäureester: z.B. Kondensationsprodukt von Carbamidsäurebutylester und Formaldehyd (Uresin B jetzt Resamin HF 450)
   4.5 Polyvinylethylether: z.B. Lutonal A 25, Lutonal A 50
5. Harze reaktiv, z.B.:
   5.1 Polyester: z.B.
      5.1.1 Polyesterpolyole: z.B. Desmophen 600; Desmophen 1100; Desmophen 1300; Desmophen RD 181; Erkardur 2128; Rokraphen 145; Scadoplast F312; Scadoplast F 355
      5.1.2 Polyester mit ungesättigten Fettsäuren: z.B. Alftalat AM 424, Synthalat E42
      5.1.3 Leinölmodifizierte Polyester: z.B. Rhenalyd MTL, Alkydal L 64
      5.1.4 Sojaölmodifizierte Polyester: z.B. Uralac AD 571X50; Jägalyd S040
      5.1.5 Safflorölmodifizierte Polyester: z.B. Jägalyd NCE 48
      5.1.6 Ricinusölmodifizierte Polyester: z.B. Alftalat AC 540
      5.1.7 Ricinenölmodifizierte Polyester: z.B. Alftalat AR 351; Jägalyd R 35; Setal 126XX60; Limoplast P33
      5.1.8 Harzmodifizierte Alkydharze: z.B. Alftalat AM 364
      5.1.9 Nichttrocknendes Alkydharz mit synthetischen Fettsäuren und Hydroxyl-Gruppen: z.B. Setal 84XX70

Von diesen Stoffen wurden mit den bisher bekannten Fertigungsverfahren nur eine begrenzte Anzahl von Phlegmatisierungsmitteln für die Herstellung plastifizierter Cellulosenitrate verarbeitet, so z.B. DBP; DOP/DEHP, DEP; DINP epoxidiertes Sojaöl, da die bisherigen Verfahren eine Verarbeitung anderer Stoffe nicht oder nur unter sehr hohem Zeitaufwand zulassen. Dies gilt insbesondere für Phlegmatisierungsmittel mit geringem Gesundheitsrisiko und hoher Umweltverträglichkeit (z.B. DBS, DIBA, DOA, TEC) ebenso wie für Produkte, die zu geringer oder keiner Migration bei geringer Lösemittelretention neigen wie Succroseacetoisbutyrat (SAIB) ; Methyldihydroabietat (HercolynD) und das Polyesterpolyol Rokraphen 145. Diese Einschränkungen treffen bei dem vorgenannten erfindungsgemäßen Verfahren nicht zu; sämtliche von 1.1 bis 5.1.9 aufgeführte Phlegmatisierungsmittel lassen sich mit ihm verarbeiten.

Das für die Herstellung des vorgenannten CellulosenitratPhlegmatisierungsmittel-Gemisches als besonders geeignet gefundene Verfahren und die Vorrichtung zeichnen sich dadurch aus, daß das Material nicht mehr geknetet, sondern nur noch verdichtet und homogenisiert wird bei gleichzeitiger Steigerung des Materialdurchsatzes. Außerdem lassen sich alle bekannten Phlegmatisierungsmittel verarbeiten, wie: nicht reaktive monomere Weichmacher (wie z.B. Phthalate, Adipate, Sebacate, Citrate, Phosphate), reaktive monomere Weichmacher (wie z.B. Citroflex 2), polymere Weichmacher (wie z.B. Paraplex G 40), Weichharze (wie z.B. Rokraphen 145, SAIB) und reaktive Harze (wie z.B. Setal 84XX60).

Weitere Einzelheiten und Vorteile ergeben sich aus der nachfolgenden Beschreibung der Erfindung anhand der Zeichnungen, in der zwei Ausführungsbeispiele einer erfindungsgemäßen Vorrichtung zur Herstellung plastifizierten Cellulosenitrats veranschaulicht sind. In der Zeichnung zeigen:
- Fig. 1: eine Vorderansicht einer mit Scherwalzen versehenen Vorrichtung in einer ersten Ausführungsform,
- Fig. 2: eine Draufsicht auf die Vorrichtung gemäß Fig. 1,
- Fig. 3: eine Seitenansicht der Vorrichtung gemäß einer Linie III - III in Fig. 2 und
- Fig. 4: eine Vorderansicht der Vorrichtung mit Scherwalzen in einer zweiten Ausführungsform.

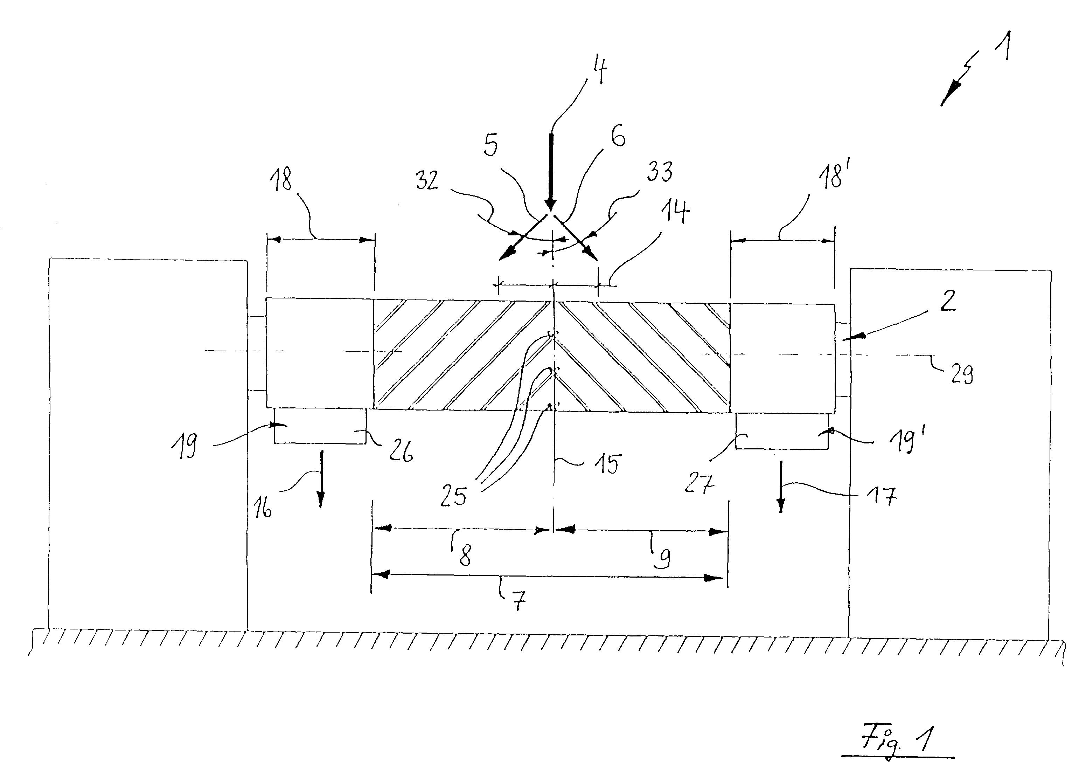

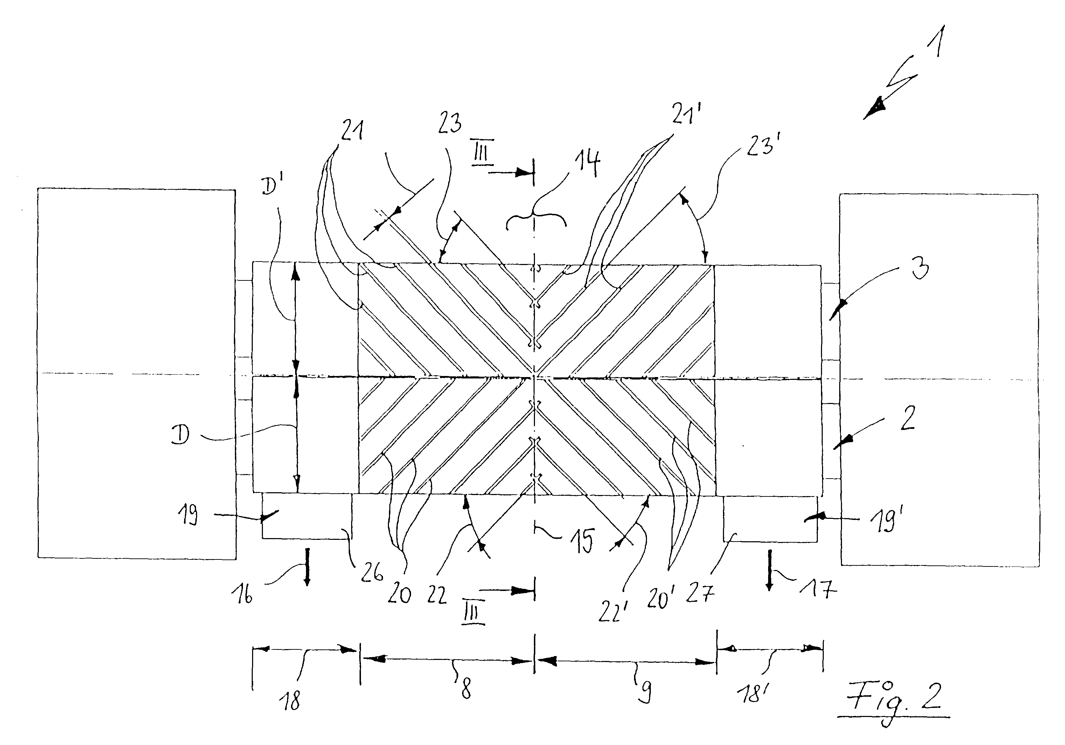

In Fig. 1 ist eine insgesamt mit 1 bezeichnete und als ein Walzenaggregat ausgebildete Vorrichtung zur Durchführung des erfindungsgemäßen Verfahrens in einer ersten Ausführungsform veranschaulicht, wobei zwischen zwei horizontal und parallel angeordneten Scherwalzen 2, 3 (Fig. 2) eine aus angefeuchtetem Cellulosenitrat und Phlegmatisierungsmittel bestehende Zwischenproduktmenge 4 bearbeitet wird.

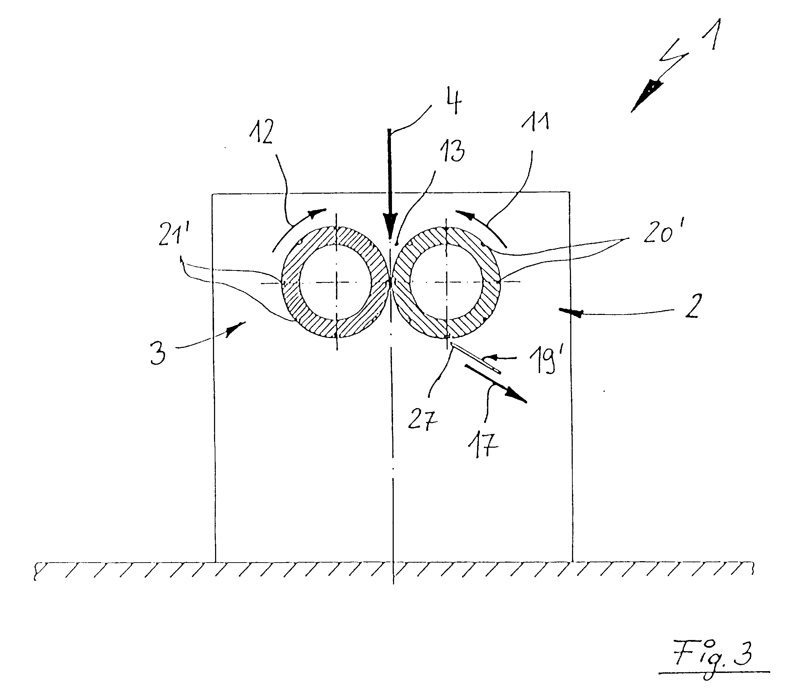

In erfindungsgemäßer Verfahrensdurchführung wird die Zwischenproduktmenge 4 dabei über den Scherwalzen 2, 3 (oder bei unmittelbarer Berührung der Walzenoberfläche) in zwei Teilmengen 5, 6 aufgeteilt, so daß danach eine insgesamt mit 7 bezeichnete Bearbeitungsstrecke des Walzenaggregats 1 wirksam ist. Die Bearbeitungsstrecke 7 des erfindungsgemäßen Walzenaggregates 1 ist dabei von zwei Teilbereichen 8, 9 gebildet, in denen die zwei gegensinnig drehenden Scherwalzen 2, 3 zusammenwirken (Pfeile 11 und 12 in Fig. 3).

Die Prinzipdarstellung gemäß Fig. 1 verdeutlicht dabei, daß die Zwischenproduktmenge 4 in zwei im wesentlichen gleiche Teilmengen 5, 6 geteilt wird und diese in einen Bearbeitungsspalt 13 (Fig. 3) gelangen. In zweckmäßiger Ausführung werden die Zwischenproduktmenge 4 bzw. die Teilmengen 5, 6 dabei unter Schwerkraftwirkung in einem Aufgabebereich 14 zugeführt, der in Längsrichtung der beiden Scherwalzen 2, 3 über eine mittlere Teilungsebene 15 definiert ist. Ausgehend von diesem Aufgabebereich 14 können die beiden Teilmengen 5, 6 ohne zusätzlichen technischen Aufwand in den jeweiligen Teilbereichen 8, 9 gleichzeitig und bei im wesentlichen gleichen Bedingungen, z. B. betreffend die Temperatur und den Druck, bearbeitet werden. Ebenso ist denkbar, die Zwischenproduktmenge 4 bei der Zuführung im Bereich einer Weiche (nicht dargestellt) so in die beiden Teilbereiche 8, 9 zu leiten, daß diese gleichmäßig ausgelastet werden.

Die insbesondere kontinuierlich zugeführte Zwischenproduktmenge 4 wird durch die konstruktive Ausbildung der beiden Scherwalzen 2, 3 gleichzeitig mit der Verdichtung und Homogenisierung in zwei diametral zueinander gerichtete Bearbeitungsrichtungen zu den jeweiligen Ende der beiden Scherwalzen 2, 3 hin gefördert, am Ende der beiden Teilbereiche 8, 9 in einen jeweiligen Entnahmebereich 18, 18' geführt und hier über Abstreifelemente 19, 19' entnommen (Pfeil 16, 17).

Für die vorbeschriebene Verfahrensführung ist jede der beiden Scherwalzen 2, 3 mit jeweils den zwei Teilbereichen 8, 9 versehen und diese weisen mehrere Schernuten 20, 20' und 21, 21' mit gegensinnigen Steigungen 22, 22' und 23, 23' auf. In der dargestellten Betriebsstellung (Fig. 2) bilden die paarweise gegenüberliegenden Schernuten in den Teilbereichen 8, 9 durch die gegensinnigen Steigungen einen Förderbereich nach Art einer Förderschnecke, so daß den beiden Teilmengen 5, 6 eine vom Aufgabebereich 14 zu den Entnahmebereichen 18, 18' hin gerichteten Förderbewegungen vermittelt wird.

Im jeweiligen Aufgabebereich 14 bilden die Schernuten 20, 20' und 21, 21' Überschneidungen 25 (Fig. 1), so daß hier über eine ständige Produktteilung ein vollständiger Transport des zugeführten Zwischenproduktes 4 erreicht nachteilige Unterbrechnung der Förderbewegung in Längsrichtung der Scherwalzen 2, 3 vermieden sind. Im Entnahmebereich 18, 18' sind an den Scherwalzen 2, 3 jeweilige als Schälmesser 26, 27 ausgebildete Abstreifelemente 19, 19' vorgesehen, mit denen das bearbeitete Cellulosenitrat abgenommen und dieses einer gemeinsamen Weiterbearbeitung zugeführt wird (nicht dargestellt).

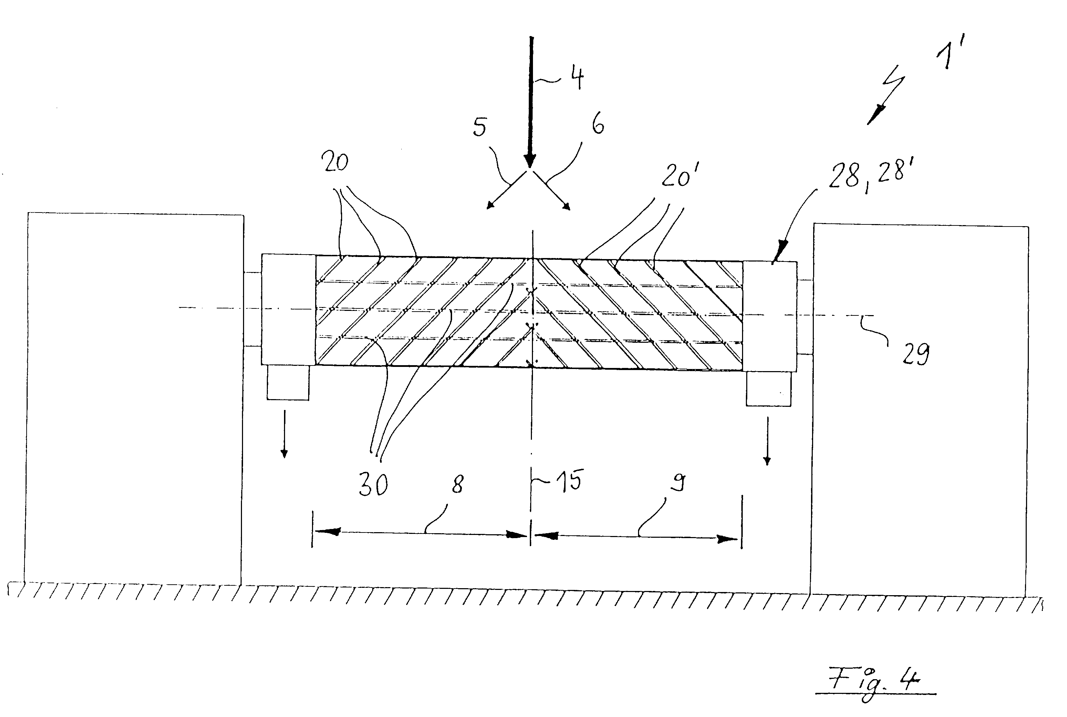

Bei der in Fig. 4 dargestellten zweiten Ausführungsform von Scherwalzen 28 bzw. 28' (nicht sichtbar) sind diese zusätzlich zu den Schernuten 20, 20' mit sich über die beiden Teilbereiche 8, 9 parallel zur Mittellängsachse 29 erstreckenden Längsnuten 30 ausgebildet, mit denen eine weitere Verbesserung der Bearbeitung erreichtbar ist.

In zweckmäßiger Ausführung des Walzenaggregats 1 gelangen Scherwalze 2, 3 zum Einsatz, die eine von der Bearbeitungsstrecke 7 und den Entnahmebereichen 18, 18' gebildete Walzenlänge von 1200 bis 1800 mm, vorzugsweise 1600 mm aufweisen und deren jeweilige den Teilbereichen 8, 9 entsprechende Arbeitsbreiten 200 bis 800 mm, vorzugsweise 500 mm betragen.

Die Arbeitsbreite in den Teilbereichen 8, 9 kann dabei mit geringem Aufwand dadurch variiert werden, daß eine Verschiebung der kontinuierlichen Materialaufgabe zu den beiden Walzenenden hin durch eine Veränderung jeweiliger Förderwinkel 32, 33 der Teilmengen 5, 6 bei der Zuführung des Zwischenproduktstromes 4 in den Aufgabegereich 14 erfolgt. Die beiden Förderwinkel 32, 33 betragen dabei 0° bis 85°, vorzugsweise 45°, so daß die auf die Scherwalzen 2, 3 auftreffende Teilmenge 5, 6 einen entsprechend verlängerten oder verkürzten Bearbeitungsweg im jeweiligen Teilbereich 8, 9 zurücklegt.

Die Scherwalzen 2 und 3 weisen in zweckmäßiger Ausführung gleiche Durchmesser D, D' auf, wobei Walzendurchmesser von 200 mm oder größer , vorzugsweise von 300 mm vorgesehen sind. Durch Vergrößerung des Walzendurchmessers D, D' und die vorbeschriebene Verkürzung der Arbeitsbreite (gemäß dem Verfahren in EP 0 369 246 B1 entspricht die Arbeitsbreite der Walzenlänge) auf die Teilbereiche 8, 9 wird das Cellulosenitrat-Gemisch 4 in dem Walzenaggregat nicht mehr geknetet, sondern nur noch verdichtet und homogenisiert, so daß nachteilige Temperaturbeeinflussungen durch Friktionswärme ausgeschlossen sind und gleichzeitig die Verweilzeit der Teilmengen 5, 6 auf den Teilbereichen 8, 9 des Walzenaggregats 1 auf 0,5 bis 1,5 min. reduziert wird.

Gleichzeitig kann die Durchsatzleistung des Verfahrens dadurch verdrei- bis vervierfacht werden, daß das Zwischenprodukt 4 in dem Aufgabebereich 14 in der Mitte der beiden gegenläufig arbeitenden Scherwalzen 2, 3 zugeführt wird und die Bearbeitung der Teilmengen 5, 6 durch die links- bzw. rechtsdrehenden Schernutenpaare gleichzeitig in Richtung zu den beiden Walzenenden hin erfolgt. Die bevorzugte Ausbildung der jeweiligen Steigungen der Schernuten 20, 20' und 21, 21' ergibt sich den Darstellungen gemäß Fig. 1 bis 4, wobei diese Steigungen mit unterschiedlichen Winkeln, vorzugsweise im Bereich von 30 bis 45°, ausgebildet sein können, um eine weitere Optimierung der Bearbeitungsbedingungen zu erreichen.

Die bearbeiteten Teilmengen 5, 6 werden an beiden Walzenenden abgenommen, wobei die Entnahmebereiche 18, 18' eine Breite von jeweils 100 bis 500 mm, vorzugsweise 300 mm haben. Die Abnahme der Teilmengen 5, 6 erfolgt als Streifen, die danach in kleine unregelmäßige Plättchen gebrochen werden, so daß eine gute Löslichkeit des Cellulosenitrat-Phlegmatisierungsmittelgemisches für dessen Weiterverarbeitung erreichbar ist.

Durch Vorschalten einer Zudosierung für das vom Zwischenprodukt 4 gebildete Ausgangsmaterial mittels einer Förderschnecke (nicht dargestellt) zum mittigen Aufgabebereich 14 der Scherwalzen 2, 3 hin und Anhängen eines Zerkleinerungsgerätes (nicht dargestellt) erhält man mit geringem technischen Aufwand einen kontinuierlichen Fertigungsprozeß für das erfindungsgemäße Cellulosenitrat-Weichmacher-Gemisch.

Die vordere Scherwalze 2 wird bevorzugt mit Temperaturen zwischen 80 und 100°C gefahren, die hintere Scherwalze 3 mit Temperaturen zwischen 70 und 90°C, wobei gleichzeitig eine niedrige Friktion zwischen 1 : 1,1 bis 1 : 1,2 gewählt wird. Dadurch und auch wegen der deutlich geringeren Materialverweilzeit und - menge auf den Scherwalzen 2, 3 wird der Bereich der Zersetzungstemperaturen (ab 130°C) nicht erreicht, so daß eine hohe Verfahrenssicherheit gewährleistet ist und alle Cellulosenitrate bzw. -gemische mit einem Stickstoffgehalt von 12,6 % oder weniger mit dem erfindungsgemäßen Verfahren und der Vorrichtung verarbeitet werden können. Da auch der Wassergehalt der Zubereitung ähnlich bisherigen Fertigungsverfahren, bei Werten zwischen 5% und 20% liegt, hat das phlegmatisierte Cellulosenitrat auch nach einer weiteren Trocknung eine flexible, zu wenig Staubbildung neigende Konsistenz, so daß eine gute und ungefährliche Verarbeitung möglich ist.

In einer weiteren, nicht dargestellten Ausführungsform des Walzenaggregats 1 kann die Bearbeitungsstrecke mit zwei im Bereich der Stirnseite der Scherwalzen jeweils einen Aufgabebereich aufweisenden Teilbereichen ausgebildet sein, wobei in entsprechender konstruktiver Gestaltung die Schernuten in Längsrichtung der Scherwalzen zu deren Mitte hin in einen Entnahmebereich übergehen, so daß dieser für das in zwei diametralen Richtungen aus den Teilbereichen geförderte Zwischenprodukt gemeinsam nutzbar und dabei eine Entnahme des Cellulosenitrats mit lediglich einem Abstreifelement möglich ist.

In einer weiteren Ausbildung der erfindungsgemäßen Vorrichtung ist ein Walzenaggregat 1 denkbar, bei dem die Scherwalzen ausgehend von einem im Bereich einer ersten Stirnseite befindlichen Aufgabebereich einen am mittleren Ende des ersten Teilbereiches befindlichen ersten Entnahmebereich aufweisen. Unmittelbar neben diesem ist auf den jeweiligen Scherwalzen der Aufgabebereich des zweiten Teilbereichs vorgesehen, der zur zweiten Stirnseite der Scherwalzen hin in den zweiten Entnahmebereich übergeht. Damit ist die Bearbeitungsstrecke 7 (Fig. 1) von zwei aneinandergereihten Teilbereichen mit gleichsinniger Bearbeitungsrichtung für die beiden Teilmengen gebildet.

## Patentansprüche

1. Verfahren zur Herstellung von plastifiziertem Cellulosenitrat, bei dem eine aus angefeuchtetem Cellulosenitrat mit einem Stickstoffgehalt von 12,6 Gew.-% oder weniger und Phlegmatisierungsmittel bestehende Zwischenproduktmenge einer vorgegebenen Bearbeitungsstrecke auf einem mit Schernuten ausgerüsteten Walzenaggregat zu einem Entnahmebereich gefördert wird, **dadurch gekennzeichnet,** daß die jeweils zugeführte Zwischenproduktmenge in zumindest zwei Teilmengen aufgeteilt wird, und daß die beiden Teilmengen in den Teilbearbeitungsstrecken in gegensinnig zueinander gerichtete Bearbeitungsrichtungen gefördert und an den Enden der jeweiligen Teilbearbeitungsstrecke entnommen werden.

2. Verfahren nach Anspruch 1, dadurch gekennzeichnet, daß die Zwischenproduktmenge in einem mittleren Aufgabebereich den beiden Teilbearbeitungsstrecken zugeführt wird.

3. Vorrichtung zur Herstellung von plastifiziertem Cellulosenitrat, die ein zwischen zwei gegensinnig drehbaren Scherwalzen (2,3;28,28') mit Schernuten eine Bearbeitungsstrecke bildendes Walzenaggregat (1) aufweist, insbesondere zur Durchführung des Verfahrens nach Anspruch 1 oder 2, dadurch gekennzeichnet, daß die Bearbeitungsstrecke (7) des Walzenaggregats (1) von zumindest zwei Teilbearbeitungsstrecken (Teilbereiche 8,9) gebildet ist und die Scherwalzen (2,3) in den paarweise gegenüberliegenden Teilbereichen (8,9) Schernuten (20,20',21,21') mit gegensinniger Steigung aufweisen.

4. Vorrichtung nach Anspruch 3, dadurch gekennzeichnet, daß die Teilbereiche (8,9) jeweils einen in Längsrichtung der Scherwalzen (2,3) mittig angeordneten Aufgabebereich (14) für das Zwischenprodukt (4) definieren und die Schernuten (20,20', 21,21') zu jeweiligen Stirnseiten der Scherwalzen (2,3) hin in einen Entnahmebereich (18,18') übergehen.

5. Vorrichtung nach einem der Ansprüche 3 oder 4, dadurch gekennzeichnet, daß die Schernuten (20,20',21,21') der beiden Teilbereiche (8,9) im Aufgabebereich (14) jeweils Überschneidungen (25) bilden.

6. Vorrichtung nach einem der Ansprüche 3 bis 5, dadurch gekennzeichnet, daß im jeweiligen Entnahmebereich (18,18') einer der Scherwalzen (2) ein als Schälmesser (26,27) ausgebildetes Abstreifelement (19,19') angeordnet ist.

7. Vorrichtung nach einem der Ansprüche 3 bis 6, gekennzeichnet durch Scherwalzen (28,28'), die zusätzlich zu den Schernuten (20,20') mit sich über beide Teilbereiche (8,9) und parallel zur Mittellängsachse (27) erstreckenden Längsnuten (30) versehen sind.

8. Vorrichtung nach einem der Ansprüche 3 bis 7, dadurch gekennzeichnet, daß im Aufgabebereich (14) eine das Zwischenprodukt dosierende Weiche vorgesehen ist.

## Claims

1. A method of producing plasticised cellulose nitrate in which a quantity of intermediate product consisting of moistened cellulose nitrate with a nitrogen content of 12.6% or less by weight or less and desensitising agent is conveyed to a predetermined processing section on a roller assembly equipped with shearing grooves and to an extraction area, characterised in that the respectively fed quantity of intermediate product is divided into at least two partial quantities and in that the two partial quantities are conveyed in processing directions which are opposite one another in the partial processing sections and are extracted at the ends of the partial processing section.

2. A method according to claim 1, characterised in that the quantity of intermediate product is fed to the two partial processing sections in a midway infeed zone.

3. An apparatus for producing plasticised cellulose nitrate and which comprises a roller assembly (1) forming a processing section between two oppositely rotatable shearing rollers (2, 3; 28, 28') which have shearing grooves, particularly for carrying out the method according to claim 1 or 2, characterised in that the processing section (7) of the roller assembly (1) is formed by at least two partial processing sections (partial zones 8, 9) and in that the shearing rollers (2, 3) have in the pairwisely oppositely disposed partial zones (8, 9) shearing grooves (20, 20' 21, 21') of oppositely directed pitch.

4. An apparatus according to claim 3, characterised in that the partial zones (8, 9) respectively define, disposed centrally in the longitudinal direction of the shearing rollers (2, 3) an infeed area (14) for the intermediate product (4) and in that the shearing grooves (20, 20', 21, 21') merge at their respective ends into an extraction zone (18, 18').

5. An apparatus according to one of claims 3 or 4, characterised in that the shearing grooves (20, 20'; 21, 21') of the two partial zones (8,9) form overlaps (25) in the respective infeed area (14).

6. An apparatus according to one of claims 3 to 5, characterised in that in the respective extraction zone (18, 18') of one of the shearing rollers (2) there is a scraper element (19, 19') constructed as a skimming blade (26, 27).

7. An apparatus according to one of claims 3 to 6, characterised by shearing rollers (28, 28') which, in addition to the shearing grooves (20, 20'), are provided with longitudinal grooves (30) extending over both partial zones (8, 9) and parallel with the longitudinal central axis (27).

8. An apparatus according to one of claims 3 to 7, characterised in that a switch for dispensing the intermediate product is provided in the infeed zone area (14).

## Revendications

1. Procédé de fabrication de nitrocellulose plastifiée, dans lequel on déplace une quantité de produit intermédiaire constitué d'une nitrocellulose ayant une teneur en azote de 12,6 % en poids ou moins et d'un agent de phlegmatisation, d'une longueur de traitement prévue à l'avance, sur un ensemble de cylindres équipé de rainures de cisaillement en direction d'une zone de prélèvement,
caractérisé en ce que
- la quantité de produit intermédiaire ajoutée à chaque fois est divisée en au moins deux quantités partielles, et en ce que les deux quantités partielles se déplacent dans les longueurs de traitement partielles dans des directions de traitement dirigées en sens opposé et
- on les prélève aux extrémités de la longueur de traitement partiel considérée.

2. Procédé selon la revendication 1,
caractérisé en ce que
la quantité de produit intermédiaire est introduite dans une zone d'apport moyenne sur les deux longueurs de traitement partiel.

3. Dispositif de fabrication de nitrocellulose plastifiée qui présente un ensemble de cylindres 1 formant une longueur de traitement entre deux cylindres de cisaillement tournant en sens contraire (2, 3 ; 28, 28') avec des rainures de cisaillement, en particulier pour la réalisation du procédé selon la revendication 1 ou 2,
caractérisé en ce que
la longueur de traitement 7 de l'ensemble de cylindres 1 est formée d'au moins deux longueurs de traitement partielles (zones partielles 8, 9) et en ce que les cylindres de cisaillement (2, 3) présentent dans les zones partielles opposées par paires (8, 9) des rainures de cisaillement (20, 20', 21, 21') à pente opposée.

4. Dispositif selon la revendication 3,
caractérisé en ce que
les zones partielles (8, 9) définissent toujours une zone d'apport (14) pour le produit intermédiaire (4) disposée au milieu dans la direction longitudinale des cylindres de cisaillement (2, 3) et en ce que les rainures de cisaillement (20, 20', 21, 21') se transforment sur les côtés frontaux correspondants des cylindres de cisaillement (2, 3) en une zone de prélèvement (18, 18').

5. Dispositif selon l'une des revendications 3 ou 4,
caractérisé en ce que
les rainures de cisaillement (20, 20', 21, 21') des deux zones partielles (8, 9) forment toujours dans la zone d'apport (14) des intersections (25).

6. Dispositif selon l'une des revendications 3 à 5,
caractérisé en ce que
dans la zone de prélèvement considérée (18, 18') d'un des cylindres de cisaillement (2) est disposé un élément d'arrachage (19, 19') formé en couteau diviseur (26, 27).

7. Dispositif selon l'une des revendications 3 à 6,
caractérisé par
des cylindres de cisaillement (28, 28') qui sont munis, outre les rainures de cisaillement (20, 20') de rainures longitudinales (30) s'étendant sur les deux zones partielles (8, 9) et parallèlement à l'axe longitudinal médian (27).

8. Dispositif selon l'une des revendications 3 à 7,
caractérisé en ce que
dans la zone d'apport (14) est prévue un indicateur dosant le produit intermédiaire.
